# EUROPÄISCHE PATENTANMELDUNG

(11) **EP 1 270 409 A1**
(43) Veröffentlichungstag der Anmeldung: **02.01.2003**
(21) Anmeldenummer: 01114424.3
(22) Anmeldetag: 15.06.2001
(51) Int. Cl.: B64D 47/06

(54) **Antikollisionsleuchte mit Infrarotfilter für Luftfahrzeuge**

(71) Anmelder: Flight Components AG, 8184 Bachenbülach (CH)
(72) Erfinder: Brenner, Paul E., 6047 Kastanienbaum (CH); Brenner, Thomar C., 8044 Zürich (CH); Müller, Arthur E., 8905 Arni (CH); Schedler, Thomas, 8165 Schleinikon (CH)
(74) Vertreter: Blum, Rudolf Emil Ernst

(57) **Zusammenfassung**

Es wird eine zugleich tag- und nachttaugliche Antikollisionsleuchte für Luftfahrzeuge offenbart. Im Stand der Technik sind getrennte Tagleuchten mit hoher Lichtstärke und Nachtleuchten mit geringer Infrarotabstrahlung und damit Blendwirkung für Nachtsichtgeräte bekannt. Die erfindungsgemässe Antikollisionsleuchte umfasst mindestens einen optischen Interferenzfilter (11) mit einem mittleren Transmissionsfaktor im Infrarot von weniger als 4 % seines Wertes im sichtbaren Weiss oder Rot. Ausführungsbeispiele betreffen u. a.: ein mittlerer Transmissionsfaktor in einem sichtbaren Spektralbereich grösser als 80 %, bevorzugt 90 % und besonders bevorzugt 95 %; eine Kombination eines Interferenzfilters (11) mit einem im Rot durchlässigen Absorptionsfarbfilter (10); ein Interferenzfilter (11) bestehend aus mehreren oktogonal angeordneten, ebenen Elementen; und ein Bandpass-Interferenzfilter mit einem im sichtbaren Rot liegenden Transmissionsbereich.

## Beschreibung

Die internationalen Luftfahrtsbestimmungen (z. B. "JAR"=Joint Aviation Regulations, "FAR"=Federal Aviation Regulations) für Luftfahrzeuge (fixed wing, rotary wing) verlangen für die Aussenbefeuerung (external lighting) ausser den Positionslampen sogenannte Antikollisionsleuchten, welche sowohl bei Tag- wie bei Nacht-Betrieb mit einer in Candela angegebenen Mindestintensität leuchten müssen. Z. B. müssen Antikollisionsleuchten gemäss JAR/FAR 23/25/27/29 in rot ("aviation red") oder in weiss ("aviation white") mit einer vorgegebenen Intensität und Farbe und in einen vorgegebenen Abstrahlbereich blinken.

Übliche Quellen für blinkendes Antikollisionslicht sind z. B. Xenon-Blitzröhren, die ein für das Auge weisses Lichtspektrum abstrahlen und für den Betrieb im roten Spektralbereich mit einem Rotfilter (normalerweise ein rotes Glas) ausgerüstet sind.

Infolge der immer häufiger werdenden Verwendung von Infrarot-Nachtsichtgeräten (sogenannten NVGs= "night vision goggles"), insbesondere durch Militärflugzeuge, entsteht dabei folgendes Problem. Das Antikollisionslicht ("ACL"=anti collision light) von Antikollisionsleuchten gemäss JAR/FAR 23/25 und 27/29 erzeugt gleichzeitig Infrarot-Strahlung, die Infrarot-Sichtgeräte (NVGs) aller Kategorien überlasten und daher blenden. Auf Luftfahrzeugen, die für NVG-Betrieb ausgerüstet werden, müssen ausser anderen Lichtquellen auch die Antikollisionsleuchten auf NVG Spezifikation (z. B. NVG-Vorschriften gemäss MIL-L-85762A) angepasst oder modifiziert werden, oder die Beleuchtung muss mit zusätzlichen NVG-tauglichen sogenannten NVG-Leuchten ergänzt werden, um das Luftfahrzeug gemäss JAR/FAR Vorschriften und zugleich NVG-Vorschriften einsatzfähig zu machen. Die bei Tag zu gebrauchende Antikollisionsleuchte ist eine stärkere
Leuchte, deren intensive Infrarotstrahlung keine Probleme bereitet, da bei Tag keine Nachtsichtgeräte gebraucht werden, wohingegen die NVG-Leuchte entweder eine geringere Intensität abstrahlt und/oder mit einem optisch dichteren, auch im infraroten Bereich stark dämpfenden Farbfilter ausgerüstet ist. Dadurch konnte bisher die Störung von Nachtsichtgeräten herabgesetzt oder vermieden werden, während infolge der bei Dunkelheit ganz wesentlich höheren Empfindlichkeit des menschlichen Auges die damit erhaltene Strahlung im sichtbaren Spektralbereich für die Vermeidung von Kollisionen noch voll ausreicht. Die Nachteile dieser Lösung sind jedoch hohe Umrüstungskosten, zusätzlicher Aufwand an teuren Komponenten und Material sowie Gewicht.

Um diese Nachteile zu vermeiden, ist die Erfindung wie im Hauptanspruch beschrieben definiert.

Die erfindungsgemässe Lösung besteht in einer Antikollisionsleuchte für Luftfahrzeuge, die mindestens ein optisches Filter aufweist, dessen mittlerer Transmissionsfaktor in einem ersten Spektralbereich weniger als 4 % seines Wertes in einem zweiten Spektralbereich beträgt, wobei der erste Spektralbereich auf der langwelligen und der zweite Spektralbereich auf der kurzwelligen Seite einer in einem Übergangsgebiet zwischen dem sichtbaren Rot und dem Infrarot befindlichen Grenze liegt. Durch die geringe Transmission im Infrarot ist eine Störung von Nachtsichtgeräten ausgeschlossen. Durch die hohe Transmission im sichtbaren weissen oder roten Spektralbereich können jedoch zugleich die Normen für eine minimale sichtbare Lichtstärke am Tag und für eine maximal zulässige Infrarot-Lichtstärke in der Nacht mit der gleichen Antikollisionsleuchte und insbesondere mit der gleichen Leuchtenleistung eingehalten werden. In den abhängigen Ansprüchen sind bevorzugte Ausführungsformen der Erfindung angegeben.

Im folgenden soll die Erfindung anhand von Ausführungsbeispielen und mit Hilfe der Zeichnungen näher erläutert werden. Es zeigen
Figur 1 eine vereinfachte perspektivische Ansicht einer Ausführungsform der Erfindung;
Figur 2 einen schematischen achsialen Schnitt durch die Ausführungsform der Figur 1;
Figur 3 einen stark schematisierten Schnitt längs III-III der Figur 2; und
Figur 4 ein Beispiel eines Transmissionsdiagrammes des Infrarotfilters der Ausführungsform gemäss Figur 1.

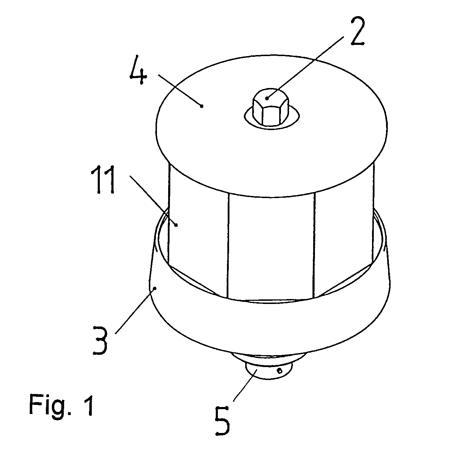

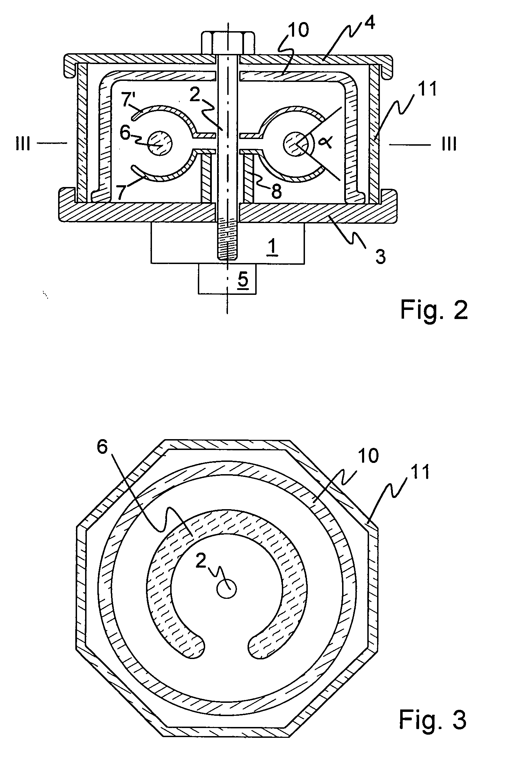

Die Figur 2 zeigt einen stark vereinfachten, vertikalen Achsialschnitt durch die in Figur 1 perspektivisch dargestellte Ausführungsform der Erfindung. Die mittels eines Bolzens 2 auf einem Sockel 1 befestigte Leuchte weist eine Grundplatte 3 und eine Deckplatte 4 auf, zwischen denen eine handelsübliche Xenon-Blitzröhre 6 gehaltert ist. Für eine weitgehend allseitige Abstrahlung ist die Xenon-Blitzröhre 6 z. B. im wesentlichen ring- oder torusförmig ausgestaltet. Ihr ausserhalb der Zeichenebene liegender, von der Torusform abweichender Fassungsteil ist in üblicher (nicht gezeigter) Weise mechanisch im Lampengehäuse befestigt und elektrisch mit (ebenfalls nicht gezeigten) Stromleitungen verbunden, welche zu einem am Sokkel 1 angebrachten Stecker 5 führen. Dieser besitzt Kontakte für die elektrische Speisung der Xenon-Röhre 6 sowie für die Zündung von Blitzen in dieser. Er ist mechanisch ausgebildet, um in eine entsprechende, aussen am Luftfahrzeug vorgesehene Fassung zu passen und in bekannter Weise daran befestigt zu werden. Ein zweiteiliger Reflektor 7, 7' umgibt den torusförmigen Teil der Xenon-Röhre 6 und hat selbst im wesentlichen die Form eines an seinem äusseren Umfang aufgeschlitzten Torus. Dessen Schalen erstrecken sich über mindestens ca. 200° und bevorzugt über 360°, wobei in der einen Schale 7 Platz für den Sockel der Xenon-Röhre 6 ausgespart ist. Die Reflektorschalen 7, 7' sind vorzugsweise so geformt, dass sie die Strahlung der Röhre 6 möglichst optimal in den vorgeschriebenen Raumwinkel leiten und über diesen verteilen. Zu diesem Zweck kann ihr Querschnitt, wie in Figur 2 gezeigt, kreisbogenförmig sein, er kann aber auch, wenn die Lichtausbeute dies verlangt, eine andere Form, insbesondere diejenige eines teilweisen Kegelschnittes, aufweisen. Um einen guten Wirkungsgrad im gewünschten Raumwinkel zu erhalten, beträgt der im Querschnitt gesehene, vertikale Öffnungswinkel α weniger als 180°, bevorzugt weniger als 130° und besonders bevorzugt weniger als 90°. Die Befestigung der Reflektorschalen 7, 7' im Lampengehäuse geschieht auf irgendeine mechanisch geeignete Art, beispielsweise mittels den Bolzen 2 umgebende Abstandsstücken, von denen nur eines 8 angedeutet ist, und passenden (nicht gezeigten) Verschraubungen, welche so angebracht sind, dass die obere Reflektorschale 7' für den Austausch einer ausgebrannten Röhre 6 bequem abgenommen werden kann.

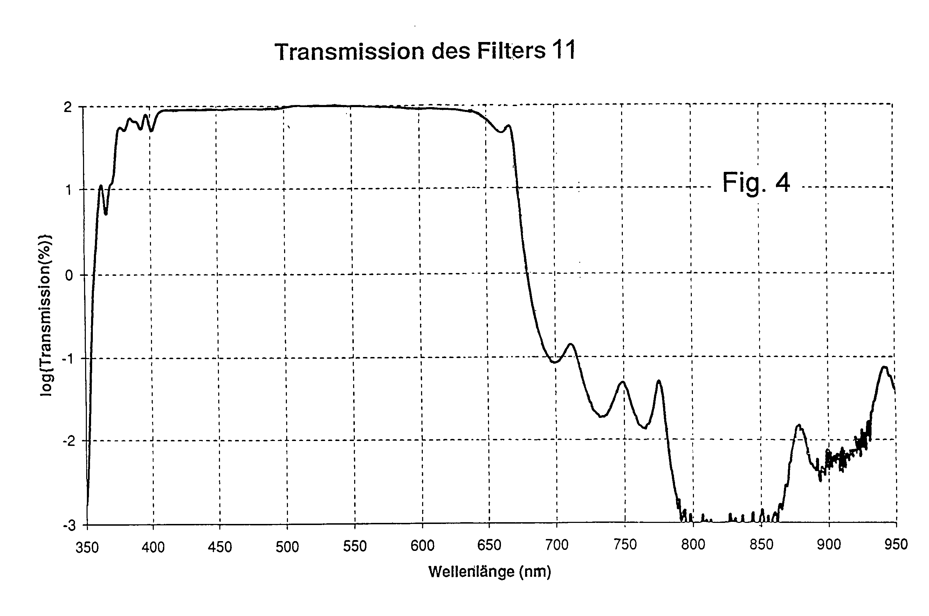

Über den Reflektor 7, 7' ist ein topfförmiger, gläserner Filter 10 gestülpt, der Wellenlängen unterhalb des sichtbaren Rotbereiches ausfiltert, um das emittierte Licht rot erscheinen zu lassen, dessen Wirkung für Wellenlängen im Infrarot-Bereich, d.h. oberhalb von etwa 680 nm, jedoch gleichgültig ist. Im Falle einer weissen Antikollisionsleuchte entfällt der Filter 10. Der Filter 10 ist umgeben von einem weiteren Filter 11, der Wellenlängen oberhalb des sichtbaren Rotbereiches ausfiltert, um Nachtsichtgeräte nicht zu stören. Im vorliegenden Beispiel besteht dieser Filter 11 aus acht oktogonal angeordneten Glasscheiben 11, wie am anschaulichsten aus Figur 1 ersichtlich. Die Scheiben 11 bilden, etwa durch eine in bekannter Weise auf ihrer inneren, geschützten Seite aufgedampfte Schichtstruktur, einen Interferenzfilter 11, welcher Strahlungen im infraroten, d.h. etwa oberhalb von 680 nm und bis mindestens 850 nm und vorzugsweise bis ca. 1000 nm weitgehend ausfiltert, beispielsweise wie aus dem Diagramm der Figur 4 ersichtlich. Dadurch wird unabhängig sowohl von der Wirkung und insbesondere Durchlässigkeit des inneren Filters 10 im Infraroten wie von der Leuchtstärke der Röhre 6 eine Störung oder Übersteuerung von im Infraroten arbeitenden Nachtsichtgeräten vermieden.

In den Unteransprüchen sind weitere Ausführungsbeispiele angegeben: ein mittlerer Transmissionsfaktor im ersten Spektralbereich kleiner als 1 %, bevorzugt kleiner als 0,4 % und besonders bevorzugt kleiner als 0,1 % seines Wertes im zweiten Spektralbereich; ein mittlerer Transmissionsfaktor im zweiten Spektralbereich grösser als 80 %, bevorzugt grösser als 90 % und besonders bevorzugt grösser als 95 %; ein erster Spektralbereich, der sich mindestens bis 850 nm und bevorzugt mindestens bis 1000 nm ins Infrarot erstreckt; ein zweiter Spektralbereich, der sich mindestens über einen sichtbar weiss erscheinenden Spektralbereich, insbesondere mindestens über den gesamten sichtbaren Spektralbereich, (weisse Antikollisionsleuchte) oder mindestens über einen sichtbaren roten Spektralbereich (rote Antikollisionsleuchte) erstreckt; eine Grenze zwischen dem ersten und zweiten Spektralbereich zwischen 640 nm und 700 nm und bevorzugt zwischen 660 nm und 680 nm.

Die Figur 3 zeigt einen stark schematisierten Schnitt längs der Linie III-III der Figur 2, um die gegenseitige Lage der Filter 10 und 11 sowie des einen teilweisen Torus bildenden, aktiven Teiles der Xenon-Röhre 6 zu veranschaulichen. Die Aufteilung des Interferenzfilters 11 in acht ebene Teile ist eine praktische Massnahme, die dadurch bedingt ist, dass ein Aufdampfen von Interferenzschichten auf gewölbte Flächen gewisse Schwierigkeiten bietet. Sofern diese keine wesentliche Rolle spielen, kann der Filter 11 ebensogut aus einer oder mehreren zylindrisch gewölbten Flächen bestehen. Die oktogonale Anordnung der ebenen Interferenzfilterflächen 11 oder die Wölbung der Filterfläche 11 dienen zur Schaffung einer Antikollissionsleuchte, die zur Abstrahlung in einen weiten Winkelbereich und bevorzugt im wesentlichen rundum, d. h. über etwa 360°, geeignet ist. Des weiteren sei noch ausdrücklich bemerkt, dass die Filter 10, 11 auch in umgekehrter Reihenfolge angeordnet oder beide durch einen einzigen Bandpass-Interferenzfilter ersetzt werden können, welcher in der Lage ist, gemäss den oben angegebenen Spezifikationen Licht mit Wellenlängen sowohl oberhalb wie unterhalb des sichtbaren Rot hinreichend auszufiltern und im sichtbaren Rot hinreichend durchzulassen.

## Patentansprüche

1. Antikollisionsleuchte für Luftfahrzeuge, **gekennzeichnet durch** mindesten einen optischen Filter (11) dessen mittlerer Transmissionsfaktor in einem ersten Spektralbereich weniger als 4 % seines Wertes in einem zweiten Spektralbereich beträgt, wobei der erste Spektralbereich auf der langwelligen, und der zweite Spektralbereich auf der kurzwelligen Seite einer in einem Übergangsgebiet zwischen dem sichtbaren Rot und dem Infrarot befindlichen Grenze liegt.

2. Antikollisionsleuchte nach Anspruch 1, **dadurch gekennzeichnet, dass** der mittlere Transmissionsfaktor im ersten Spektralbereich weniger als 1 %, bevorzugt weniger als 0,4 % und besonders bevorzugt weniger als 0,1 % seines Wertes im zweiten Spektralbereich beträgt.

3. Antikollisionsleuchte nach einem der vorangehenden Ansprüche, **dadurch gekennzeichnet, dass** der mittlere Transmissionsfaktor im zweiten Spektralbereich mehr als 80 %, bevorzugt mehr als 90 % und besonders bevorzugt mehr als 95 % beträgt.

4. Antikollisionsleuchte nach einem der vorangehenden Ansprüche, **dadurch gekennzeichnet, dass** die Grenze zwischen 640 nm und 700 nm und bevorzugt zwischen 660 nm und 680 nm liegt.

5. Antikollisionsleuchte nach einem der vorangehenden Ansprüche, **dadurch gekennzeichnet, dass** sich der erste Spektralbereich mindestens bis 850 nm und bevorzugt mindestens bis 1000 nm ins Infrarot erstreckt.

6. Antikollisionsleuchte nach einem der vorangehenden Ansprüche, **dadurch gekennzeichnet, dass** sich der zweite Spektralbereich mindestens über einen sichtbaren weissen Spektralbereich oder mindestens über einen sichtbaren roten Spektralbereich erstreckt.

7. Antikollisionsleuchte nach einem der vorangehenden Ansprüche, **gekennzeichnet durch** einen weiteren, Wellenlängen unterhalb des sichtbaren Rot dämpfenden Filter (10).

8. Antikollisionsleuchte nach einem der vorangehenden Ansprüche, **dadurch gekennzeichnet, dass** der eine Filter (11) ein Interferenzfilter (11) und insbesondere ein weiterer Filter (10) ein Absorptionsfarbfilter (10) ist.

9. Antikollisionsleuchte nach Anspruch 8, **dadurch gekennzeichnet, dass** der Interferenzfilter (11) aus mehreren ebenen Elementen (11) besteht.

10. Antikollisionsleuchte nach einem der Ansprüche 1 bis 5, **dadurch gekennzeichnet, dass** der eine Filter (11) ein Bandpass-Interferenzfilter mit einem im sichtbaren Rot liegenden Transmissionsbereich ist.

11. Antikollisionsleuchte nach Anspruch 10, **dadurch gekennzeichnet, dass** der Bandpassfilter aus mehreren ebenen Elementen besteht.

12. Antikollisionsleuchte nach einem der vorangehenden Ansprüche, **gekennzeichnet durch** eine blitzende Lichtquelle (6), die sich als gebogenes Leuchtrohr (6) über mehr als 200° torusförmig um eine Achse (2) erstreckt und umgeben ist von einem im wesentlichen ebenfalls über mehr als 200° torusförmigen, an seiner äusseren Peripherie geschlitzten Reflektor (7, 7'), wobei dessen Schlitz einen von der kreisbogenförmigen Längsachse des Leuchtrohres (6) aus gesehen und in einer achsialen Ebene gemessenen Öffnungswinkel (α) von maximal 180°, bevorzugt maximal 130° und besonders bevorzugt maximal 90° offen lässt.
